# EUROPEAN PATENT APPLICATION

(11) **EP 4 851 447 A1**
(43) Date of publication of application: **09.12.2026**
(21) Application number: 25771632.4
(22) Date of filing: 23.01.2025
(51) Int. Cl.: F02D 19/08, F02D 19/02, F02D 41/04, F02D 43/00, F02P 5/15

(54) **CONTROL DEVICE, ENGINE SYSTEM, CONTROL METHOD, AND PROGRAM**

(30) Priority: 13.03.2024 JP 2024038924
(71) Applicant: MITSUBISHI HEAVY INDUSTRIES ENGINE & TURBOCHARGER, LTD., Sagamihara-shi, Kanagawa 252-5293 (JP)
(72) Inventor: TAKAYANAGI, Ko, Sagamihara-shi, Kanagawa 252-5293 (JP); NAITO, Keita, Sagamihara-shi, Kanagawa 252-5293 (JP); NOGUCHI, Tomohiro, Sagamihara-shi, Kanagawa 252-5293 (JP); KOYAMA, Yuki, Sagamihara-shi, Kanagawa 252-5293 (JP); SAITO, Minoru, Sagamihara-shi, Kanagawa 252-5293 (JP); SASAMATA, Yuichi, Nagoya-shi, Aichi 456-8511 (JP); KAWAGUCHI, Motonobu, Nagoya-shi, Aichi 456-8511 (JP); YAMAMOTO, Akane, Nagoya-shi, Aichi 456-8511 (JP)
(74) Representative: Hoffmann Eitle
(86) International application number: PCT/JP2025/002065
(87) International publication number: WO 2025/192049

(57) **Abstract**

Provided is control for switching between fuel mixing and non-fuel mixing during operation of the engine while continuing stable operation of the engine. The present invention provides control to switch between fuel mixing and non-fuel mixing during engine operation, while continuing a stable engine operation. This control device is an engine control device and comprises: a means for determining whether or not to perform co-combustion control using a mixed fuel, which is obtained by mixing a plurality of fuels, when the engine is in operation; a means for controlling ignition timing of the engine; and a means for performing air-fuel ratio control in a combustion chamber of the engine. When the determination means determines to perform the co-combustion control, the means for controlling ignition timing starts retard control of the ignition timing before supply of the mixed fuel is started, and completes the retard control before the supply of the mixed fuel is started. When the supply of the mixed fuel is started, the means for performing the air-fuel ratio control performs the air-fuel ratio control with a target air-fuel ratio corresponding to a mixing ratio indicating the ratio of each of the plurality of fuels in the mixed fuel.

## Description

### Technical Field

The present disclosure relates to a control device, an engine system, a control method, and a program. The present disclosure claims priority based on Japanese Patent Application No. 2024-038924 filed in Japan on March 13, 2024, the contents of which are incorporated herein by reference.

### Background Art

As part of CO₂ reduction, a system has been proposed in which a gas engine is driven and power is generated by a fuel obtained by mixing hydrogen with a fuel gas such as city gas (natural gas). In a gas engine in the related art, the same fuel is often used continuously during operation, and even in a case where a gas property of the fuel is switched, the magnitude of the change is limited. On the other hand, since hydrogen has a significantly different density and calorie from city gas, a change that has not been assumed so far occurs between an operating state in which only city gas is used and an operating state in which a fuel mixed with hydrogen is used. In order to cope with this, it is necessary to switch an ignition timing and an air-fuel ratio of the engine according to a mixing ratio of hydrogen. When switching between fuel mixing and non-fuel mixing, it is necessary to change a parameter of the air-fuel ratio at an appropriate speed.

PTL 1 discloses a control method of changing an ignition timing of a mixed gas in a case where an air-fuel ratio is switched in an engine using the mixed gas obtained by mixing fuels having different combustion velocities, so that a required torque is obtained. However, in a case where the air-fuel ratio and the ignition timing are changed at the same time, an intermediate state is likely to be unstable.

### Citation List

### Patent Literature

PTL 1: Japanese Unexamined Patent Application Publication No. 2009-209903

### Summary of Invention

### Technical Problem

There is a demand for a technique of switching between fuel mixing and non-fuel mixing during operation of the engine while continuing stable operation of the engine.

The present disclosure provides a control device, an engine system, a control method, and a program capable of solving the above-described problems.

### Solution to Problem

According to an aspect of the present disclosure, a control device is a control device for an engine, the control device including: means for determining whether or not to perform, during operation of the engine, co-combustion control using a mixed fuel obtained by mixing a plurality of fuels; means for controlling an ignition timing of the engine; and means for performing air-fuel ratio control in a combustion chamber of the engine, in which, in a case where the means for determining determines to perform the co-combustion control, the means for controlling the ignition timing starts retard control of the ignition timing before the mixed fuel is supplied, and completes the retard control before the mixed fuel is supplied, and the means for performing the air-fuel ratio control performs, when the supply of the mixed fuel is started, the air-fuel ratio control with a target air-fuel ratio corresponding to a mixing ratio indicating a proportion of each of the plurality of fuels in the mixed fuel.

According to an aspect of the present disclosure, an engine system includes an engine, a fuel mixing device that mixes a plurality of fuels to generate a mixed fuel and supplies the mixed fuel to the engine, and the control device.

According to an aspect of the present disclosure, a control method is a control method for an engine, the control method including a step of determining whether or not to perform, during operation of the engine, co-combustion control using a mixed fuel obtained by mixing a plurality of fuels, a step of controlling an ignition timing of the engine, and a step of performing air-fuel ratio control in a combustion chamber of the engine, in which, in a case where determination is made to perform the co-combustion control in the step of determining, in the step of controlling the ignition timing, retard control of the ignition timing is started before the mixed fuel is supplied, and the retard control is completed before the mixed fuel is supplied, and in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.

According to an aspect of the present disclosure, a program causes a computer of a control device for an engine to execute a process including a step of determining whether or not to perform, during operation of the engine, co-combustion control using a mixed fuel obtained by mixing a plurality of fuels, a step of controlling an ignition timing of the engine, and a step of performing air-fuel ratio control in a combustion chamber of the engine, in which, in a case where determination is made to perform the co-combustion control in the step of determining, in the step of controlling the ignition timing, retard control of the ignition timing is started before the mixed fuel is supplied, and the retard control is completed before the mixed fuel is supplied, and in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.

### Advantageous Effects of Invention

According to the control device, the engine system, the control method, and the program, it is possible to switch between fuel mixing and non-fuel mixing during operation of the engine while stably operating the engine.

### Brief Description of Drawings

FIG. 1 is a block diagram showing an example of an engine system according to an embodiment.
FIG. 2 is a time chart showing an example of co-combustion control according to the embodiment.
FIG. 3 is a diagram showing an example of mode transition in the co-combustion control according to the embodiment.
FIG. 4 is a diagram showing an operation when a stop condition of the co-combustion control according to the embodiment is satisfied.
FIG. 5 is a schematic diagram showing an example of a hardware configuration of a controller according to the embodiment.

### Description of Embodiments

### <Embodiment>

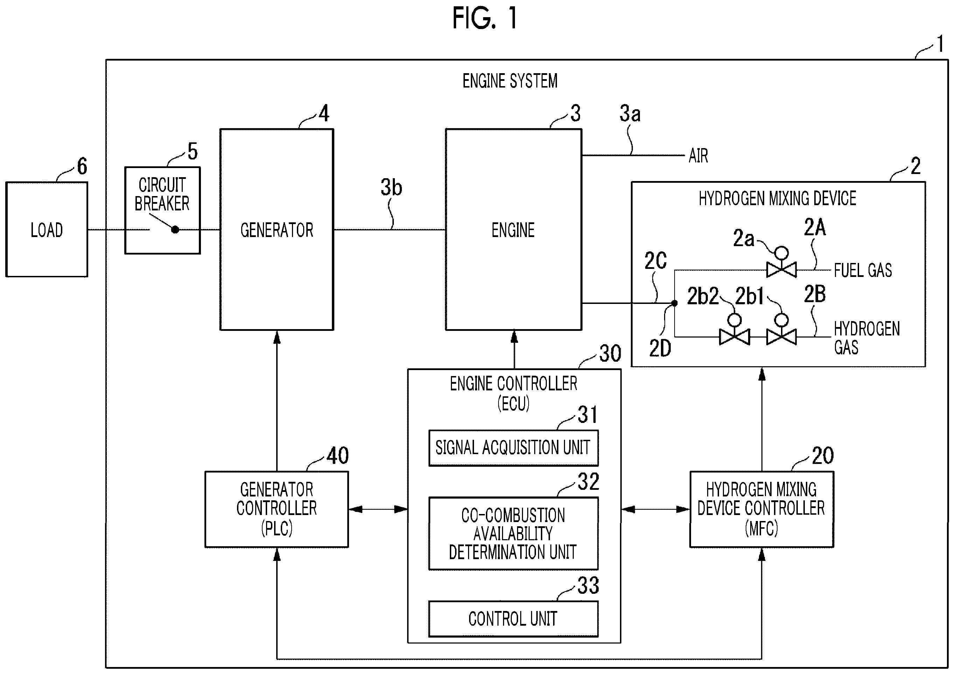

Hereinafter, a configuration of an engine system 1 of the present disclosure and control thereof will be described with reference to FIGS. 1 to 5.

FIG. 1 is a block diagram showing an example of an engine system according to the embodiment.

An engine system 1 includes a hydrogen mixing device 2, an engine 3, a generator 4, a circuit breaker 5, a hydrogen mixing device controller 20 which is a control device of the hydrogen mixing device 2, an engine controller 30 which is a control device of the engine 3, and a generator controller 40 which is a control device of the generator 4 and the like.

The hydrogen mixing device 2 generates a mixed fuel obtained by mixing hydrogen with a fuel gas such as city gas (natural gas), and supplies the generated mixed fuel to the engine 3. A proportion of hydrogen in the mixed fuel is referred to as a mixing ratio. The mixing ratio is controlled between 0% and several tens of %. For example, when the engine 3 is started and reaches a stable operating state, the mixing ratio is gradually increased from 0%, and when the mixing ratio reaches a predetermined value, the mixing ratio is maintained at the predetermined value. Then, when a sudden change in load or an abnormality in the engine 3 is detected, the mixing ratio is reduced to 0%. The hydrogen mixing device 2 includes a pipe 2A to which a fuel gas (hereinafter, referred to as city gas) is supplied, a pipe 2B to which a hydrogen gas is supplied, and a pipe 2C to which a mixed fuel is supplied. The pipe 2A and the pipe 2B are connected to the pipe 2C at a mixing point 2D. A flow control valve 2a is provided in the pipe 2A, and a flow control valve 2b1 and a hydrogen shut-off valve 2b2 are provided in the pipe 2B. Pressure gauges (not shown) are provided in the pipes 2A and 2B, and the hydrogen mixing device controller 20 controls the opening degree of the flow control valve 2a and the opening degree of the flow control valve 2b1 in a state where the hydrogen shut-off valve 2b2 is opened, based on the flow rates of the hydrogen gas and the city gas calculated from the measured values of the pressures of the pipes 2A and 2B, thereby controlling the mixing ratio at the mixing point 2D to a desired value. The value of the mixing ratio may be set in the hydrogen mixing device controller 20 or may be instructed from the engine controller 30 or the generator controller 40.

The engine 3 is a gas engine that uses city gas as a fuel, and generates a mixed gas by mixing the mixed fuel supplied from the hydrogen mixing device 2 with intake air (air) supplied through a pipe 3a, and rotates and drives an output shaft 3b by combusting the generated mixed gas. The engine controller 30 mainly operates the engine 3 by performing combustion control and air-fuel ratio control. In the combustion control, feedback control is performed to keep the rotation speed and the load of the engine 3 constant. In the air-fuel ratio control, feedback control is performed such that the air-fuel ratio becomes a target value by controlling a throttle valve (not shown) or the like provided in a pipe system of the mixed gas flowing into the combustion chamber in order to keep the air-fuel ratio in the combustion chamber of the engine 3 constant. Since the configuration of the engine 3, the combustion control, and the air-fuel ratio control are well known, detailed description thereof will be omitted. The functions of the engine controller 30 related to the co-combustion control of the present embodiment will be described later.

The generator 4 is connected to the engine 3 via the output shaft 3b, and generates power by a rotational driving force transmitted from the output shaft 3b. The generator 4 is connected to a power grid (not shown) via a circuit breaker 5. The power generated by the generator 4 is supplied to a load 6 through the power grid by opening and closing the circuit breaker 5. The generator controller 40 controls the generator 4, the circuit breaker 5, an auxiliary machine (not shown), and the like.

The hydrogen mixing device controller 20, the engine controller 30, and the generator controller 40 are connected to each other via a network such as a LAN and a signal line. A control state of the engine system 1 is transmitted and received through the network, and fault information (fault contact signal) and the like are transmitted and received through the signal line, and these pieces of information are shared among the three controllers 20, 30, and 40. For example, from the hydrogen mixing device controller 20 to the engine controller 30, a mixing ratio of hydrogen at the mixing point 2D and a mixing flag indicating that the fuel is being mixed are transmitted. From the engine controller 30 to the hydrogen mixing device controller 20 and the generator controller 40, a determination result (co-combustion permission flag = ON, OFF) as to whether or not the co-combustion control (operation of the engine 3 using the mixed fuel in which hydrogen is mixed) is possible, and a signal (ignition timing advance completion signal, ignition timing retard completion signal) indicating completion of the ignition timing control are transmitted. From the hydrogen mixing device controller 20 or the generator controller 40 to the engine controller 30, an instruction signal (co-combustion control PB = ON) to start the co-combustion control is transmitted. The generator controller 40 transmits a load signal indicating a magnitude of the load 6 to the engine controller 30.

The engine controller 30 includes a signal acquisition unit 31, a co-combustion availability determination unit 32, and a controller 33.

The signal acquisition unit 31 acquires the load signal indicating the magnitude of the load 6 from the generator controller 40. The signal acquisition unit 31 determines load rejection, load application, and the like based on the load signal. The signal acquisition unit 31 acquires the mixing ratio and the mixing flag at the mixing point 2D from the hydrogen mixing device controller 20. The signal acquisition unit 31 acquires the instruction signal (co-combustion control PB = ON) to start the co-combustion control from the hydrogen mixing device controller 20 or the generator controller 40.

The co-combustion availability determination unit 32 determines whether or not the co-combustion control, that is, the operation of the engine 3 using the mixed fuel obtained by mixing hydrogen with the city gas is possible. For example, the co-combustion availability determination unit 32 determines that the co-combustion control is possible in a case where the magnitude of the load 6 is equal to or greater than a predetermined reference value or in a case where the engine 3 is in a situation that can be regarded as a stable operating state. For example, the co-combustion availability determination unit 32 determines that the co-combustion control is not possible in a case where the engine 3 is out of the stable operating state. Alternatively, in a case where an instruction to stop the co-combustion control is input by the operator, the co-combustion availability determination unit 32 may determine that the co-combustion control is not possible. The co-combustion availability determination unit 32 transmits the co-combustion permission flag = ON to the hydrogen mixing device controller 20 and the generator controller 40 in a case where it is determined that the co-combustion control is possible, and transmits the co-combustion permission flag = OFF to the hydrogen mixing device controller 20 and the generator controller 40 in a case where it is determined that the co-combustion control is not possible. In a case where determination is made that the co-combustion control is possible, for example, the operator or the like instructs the hydrogen mixing device controller 20 or the generator controller 40 to start the co-combustion control, and this instruction signal (co-combustion control PB = ON) is transmitted to the engine controller 30.

The controller 33 controls the engine 3. For example, in a case where the signal acquisition unit 31 acquires the instruction signal (co-combustion control PB = ON) to start the co-combustion control, the controller 33 performs retard control (retard) of retarding the ignition timing of the engine 3. In a case where the retard control is completed, the controller 33 notifies the hydrogen mixing device controller 20 of the completion of the retard control (ignition timing retard completion signal). In a case where the notification of the completion of the retard control is received, the hydrogen mixing device controller 20 starts mixing of the city gas and the hydrogen gas, and transmits the mixing ratio and the mixing flag to the engine controller 30. In a case where the mixing ratio and the mixing flag are received through the signal acquisition unit 31, the controller 33 performs the air-fuel ratio control according to the mixing ratio of hydrogen. For example, the controller 33 has a table in which the mixing ratio and the air-fuel ratio are associated with each other, and calculates the air-fuel ratio according to the mixing ratio based on the table and the mixing ratio acquired from the hydrogen mixing device controller 20. Then, the controller 33 performs feedback control such that the air-fuel ratio in the combustion chamber of the engine 3 reaches the target air-fuel ratio, with the calculated air-fuel ratio as the target.

The controller 33 detects an abnormality in the engine 3 based on, for example, a value detected by a sensor provided at each part of the engine 3. For example, a determination criterion for a minor fault in which the co-combustion control can be continued, a minor fault in which the co-combustion control cannot be continued (a minor fault that affects the air-fuel ratio control), and a serious fault is determined in advance, and the controller 33 determines whether the detected abnormality is the minor fault in which the co-combustion control can be continued, the minor fault in which the co-combustion control cannot be continued, or the serious fault, based on the determination criterion, and displays the detected abnormality on the display unit or notifies the other controllers 20 and 40 of details of the abnormality or the like.

In a case where the co-combustion availability determination unit 32 determines that the co-combustion control cannot be performed or the operator instructs the end of the co-combustion control during the co-combustion control, the hydrogen mixing device controller 20 gradually or promptly (immediately) stops the mixing of the fuel. Then, the controller 33 continues the air-fuel ratio control according to the mixing ratio while keeping the ignition timing retarded, and in a case where the mixing ratio becomes 0%, the controller 33 returns the ignition timing that has been retarded to the original state (advance angle control). In this way, in the present embodiment, when switching between fuel mixing and non-fuel mixing during operation of the engine, the air-fuel ratio and the ignition timing are not changed at the same time, but the air-fuel ratio and the ignition timing are changed at different times. In a case where the mixing of the fuel is started, the ignition timing is changed (retarded) while the air-fuel ratio is fixed, and then the air-fuel ratio is changed in accordance with an increase in the mixing ratio. In a case where the mixing of the fuel is stopped, the air-fuel ratio is changed in accordance with a decrease in the mixing ratio while the ignition timing is fixed, and the ignition timing is returned to the original state after the mixing ratio becomes 0%. By separately controlling the air-fuel ratio and the ignition timing in this way, the control can be simplified, the control is facilitated, and the stable operation of the engine 3 can be continued when switching between fuel mixing and non-fuel mixing during operation of the engine 3.

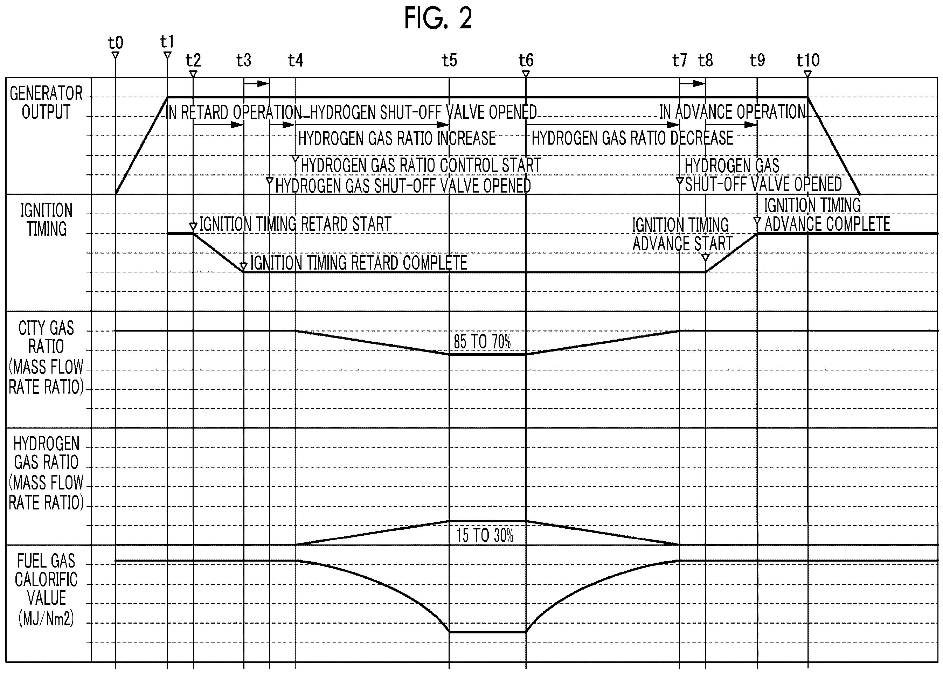

The switching of the co-combustion control during operation of the engine will be described with reference to the time chart of FIG. 2.

At time t0, the engine 3 is started, and the output of the generator 4 starts to increase. At time t1, the output of the generator 4 reaches the rated load. The ignition timing in the engine 3 at this time is, for example, a position where the crank angle is 10° before the top dead center. Thereafter, at time t2, the co-combustion permission flag = ON is transmitted to the hydrogen mixing device controller 20 or the like, and the instruction signal (co-combustion control PB = ON) to start the co-combustion control is transmitted from the hydrogen mixing device controller 20 or the generator controller 40 to the engine controller 30. In a case where the instruction signal is received, the controller 33 performs the retard control of the ignition timing to, for example, a position of 6° before the top dead center. In a case where the retard control is completed at time t3, the controller 33 transmits the ignition timing retard completion signal to the hydrogen mixing device controller 20. The controller 33 waits as it is until the mixing flag is transmitted from the hydrogen mixing device controller 20. During this time, the controller 33 performs the air-fuel ratio control based on the air-fuel ratio at the mixing ratio of 0%.

In a case where the ignition timing retard completion signal is acquired, and after a while, at time t4, the hydrogen mixing device controller 20 opens the flow control valve 2b1 and the hydrogen shut-off valve 2b2, and gradually increases the mixing ratio of the hydrogen until the predetermined mixing ratio (for example, 25%) is reached. In a case where the flow control valve 2b1 and the hydrogen shut-off valve 2b2 are opened and the mixing of the hydrogen gas and the city gas is started, the hydrogen mixing device controller 20 transmits the mixing flag and the mixing ratio at the mixing point 2D at that time to the engine controller 30. In a case where the mixing flag and the mixing ratio are acquired, the controller 33 calculates the air-fuel ratio according to the acquired mixing ratio, and performs the air-fuel ratio control with the calculated air-fuel ratio as the target. The controller 33 changes the target air-fuel ratio according to the change in the mixing ratio while keeping the ignition timing retarded, and continues the air-fuel ratio control.

In a case where the predetermined mixing ratio is reached at time t5, the hydrogen mixing device controller 20 continues to supply the mixed fuel obtained by mixing the hydrogen and the city gas at the predetermined mixing ratio to the engine 3 until the co-combustion availability determination unit 32 determines that the co-combustion control cannot be performed, or the co-combustion permission flag = OFF is transmitted by inputting the stop instruction of the co-combustion control by the operator or the like.

In a case where the co-combustion permission flag = OFF is transmitted from the co-combustion availability determination unit 32 to the hydrogen mixing device controller 20 for some reason at time t6, the hydrogen mixing device controller 20 controls the flow control valves 2a and 2b1 to reduce the mixing ratio of the hydrogen to 0%. In this case, in a case where the engine 3 is out of the operating state in which the co-combustion control can be performed, or in a case where, for example, a minor fault in which the air-fuel ratio control cannot be sufficiently performed occurs in the engine 3, the hydrogen mixing device controller 20 gradually reduces the mixing ratio to 0% over a certain period of time. FIG. 2 is a time chart in such a case. On the other hand, in a case where the load rejection or the serious fault occurs, the hydrogen mixing device controller 20 immediately closes the hydrogen shut-off valve 2b2 and promptly reduces the mixing ratio to 0%. Even while the mixing ratio is being reduced, the mixing flag and the mixing ratio are transmitted from the hydrogen mixing device controller 20 to the engine controller 30. The controller 33 changes the target air-fuel ratio according to the change in the mixing ratio while keeping the ignition timing retarded, and continues the air-fuel ratio control.

In a case where the mixing ratio reaches 0% at time t7, the hydrogen mixing device controller 20 stops transmitting the mixing flag. The controller 33 performs the air-fuel ratio control based on the air-fuel ratio at the mixing ratio of 0%. In a case where a predetermined time elapses from the time when the mixing flag is no longer transmitted at time t7 and time t8 is reached, the controller 33 performs the advance angle control on the ignition timing that has been retarded, and returns the ignition timing to the original ignition timing (10° before the top dead center). In a case where the advance angle control is completed at time t9, the controller 33 transmits the ignition timing advance completion signal to the hydrogen mixing device controller 20. Thereafter, at time t10, the output of the generator 4 is reduced by an instruction of the operator or the like.

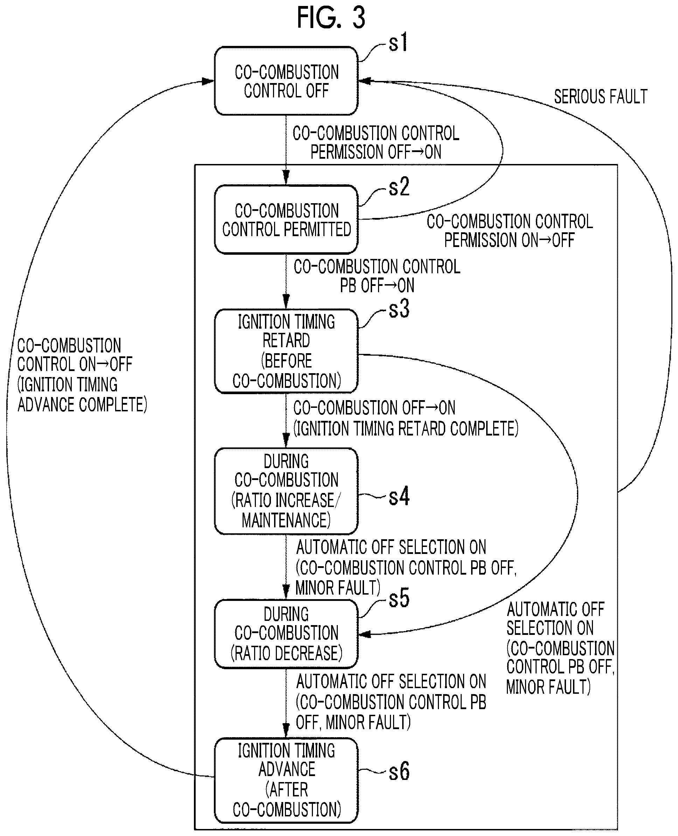

FIG. 3 shows an outline of a transition of a control state in the co-combustion control of the present embodiment.

In a case where a condition for enabling the co-combustion control is satisfied from the state (S1) in which the co-combustion control is OFF, the co-combustion availability determination unit 32 permits the co-combustion control (S2). The co-combustion availability determination unit 32 determines whether or not the co-combustion control is possible based on whether or not the stable operation of the engine 3 is possible after the start of the co-combustion control. For example, in a case where the stable operation is possible even in a case where the mixing ratio is increased, the mixing ratio is increased such that CO2 can be reduced, and in a case where it is difficult to perform the stable operation with the mixed fuel, a determination is made to stop the mixing. For example, the co-combustion availability determination unit 32 may determine that the co-combustion control is possible (permits the co-combustion control) in a case where the magnitude of the load 6 acquired by the signal acquisition unit 31 is equal to or greater than a predetermined load. Alternatively, the co-combustion availability determination unit 32 may determine that the co-combustion control is possible (permitted) in a case where the temperature of the lubricant or the coolant is equal to or higher than a predetermined threshold value or in a case where a certain period has elapsed from the start of the engine 3, assuming that the operating state is stable. In a case where the co-combustion availability determination unit 32 permits the co-combustion control, the co-combustion availability determination unit 32 transmits the co-combustion permission flag = ON to the hydrogen mixing device controller 20 or the like. In a case where the hydrogen mixing device controller 20 or the like receives the co-combustion permission flag = ON, the hydrogen mixing device controller 20 or the like displays the information on the display unit. Based on the instruction of the operator, the hydrogen mixing device controller 20 or the like transmits the instruction signal (co-combustion control PB = ON) to start the co-combustion control to the engine controller 30.

In a case where the instruction signal to start the co-combustion control is received, the controller 33 determines to perform the co-combustion control. In a case where a determination is made to perform the co-combustion control, the controller 33 performs the retard control of the ignition timing (S3). In a case where the retard control is completed, the controller 33 transmits the ignition timing retard completion signal to the hydrogen mixing device controller 20. The hydrogen mixing device controller 20 increases the mixing ratio of the hydrogen, and transmits the co-combustion flag and the mixing ratio to the engine controller 30. The controller 33 performs the air-fuel ratio control based on the air-fuel ratio corresponding to the increase in the mixing ratio (S4). In a case where the mixing ratio reaches the predetermined value, the hydrogen mixing device controller 20 maintains the mixing ratio of the hydrogen, and transmits the co-combustion flag and the mixing ratio to the engine controller 30. The controller 33 continues the air-fuel ratio control based on the air-fuel ratio corresponding to the mixing ratio (S4).

In a case where a minor fault occurs in the retard control of the ignition timing (S3) or the co-combustion control (S4), the controller 33 transmits the stop instruction of the co-combustion control (co-combustion control automatic OFF selection flag = ON) to the hydrogen mixing device controller 20. In a case where the stop instruction is received, the hydrogen mixing device controller 20 transmits the co-combustion flag and the mixing ratio to the engine controller 30 while reducing the mixing ratio of the hydrogen to 0%. The hydrogen mixing device controller 20 transmits the instruction signal for stopping the co-combustion control (co-combustion control PB = OFF) to the engine controller 30. The controller 33 performs the air-fuel ratio control based on the air-fuel ratio corresponding to the increase in the mixing ratio (S5). In a case where the mixing ratio reaches 0%, the controller 33 performs the advance angle control of the ignition timing (S6). In a case where the advance angle control is completed, the controller 33 transmits the ignition timing advance completion signal to the hydrogen mixing device controller 20. The state of the co-combustion control returns to OFF (S1).

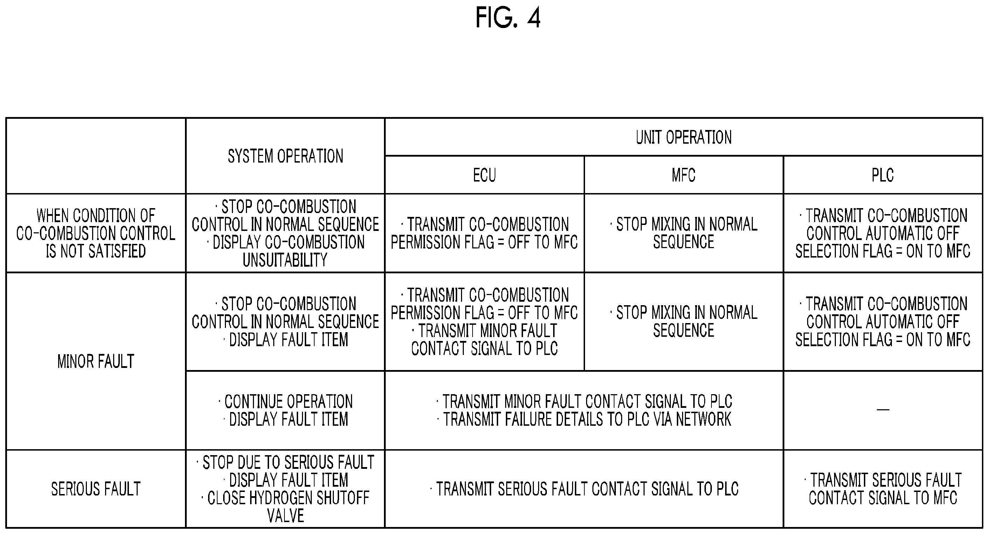

Next, an operation in a case where the stop condition of the co-combustion control is satisfied will be described with reference to FIG. 4. The ECU, the MFC, and the PLC in FIG. 4 indicate the engine controller 30, the hydrogen mixing device controller 20, and the generator controller 40, respectively.

### (1) Case where Condition of Co-Combustion Control is Not Satisfied

In a case where the condition is not satisfied during the co-combustion control, the engine system 1 stops the co-combustion control by a normal sequence in which the mixing ratio is gradually decreased as shown in the time chart of FIG. 2. For example, in a case where the coolant temperature or the lubricant temperature deviates from the appropriate range or the load is equal to or less than the reference value, the co-combustion availability determination unit 32 determines to stop the co-combustion control. In a case where the engine controller 30 detects that the condition of the co-combustion control is not satisfied, the co-combustion availability determination unit 32 transmits the co-combustion permission flag = OFF to the hydrogen mixing device controller 20. In a case where the generator controller 40 detects that the condition of the co-combustion control is not satisfied, the generator controller 40 transmits the co-combustion permission flag = OFF to the hydrogen mixing device controller 20. In a case where the co-combustion permission flag = OFF is transmitted, the hydrogen mixing device controller 20 reduces the mixing ratio in the normal sequence and stops the mixing of the fuel. The hydrogen mixing device controller 20, the engine controller 30, and the generator controller 40 display that the condition of the co-combustion control is not satisfied on the display unit of the device.

### (2) Case where Minor Fault Occurs

In a case where a minor fault occurs during the co-combustion control, the response varies depending on the nature of the minor fault. In a case of a minor fault in which the air-fuel ratio control cannot be sufficiently performed, the engine system 1 stops the co-combustion control by the normal sequence. In a case where such a minor fault is detected by the engine controller 30, the controller 33 transmits the stop instruction of the co-combustion control (co-combustion control automatic OFF selection flag = ON) to the hydrogen mixing device controller 20. The controller 33 transmits the minor fault contact signal to the generator controller 40. In a case where the generator controller 40 detects a minor fault that affects the air-fuel ratio control, the generator controller 40 transmits the stop instruction of the co-combustion control (co-combustion control automatic OFF selection flag = ON) to the hydrogen mixing device controller 20. In a case where the co-combustion control automatic OFF selection flag = ON is transmitted, the hydrogen mixing device controller 20 reduces the mixing ratio in the normal sequence and stops the mixing of the fuel. The hydrogen mixing device controller 20, the engine controller 30, and the generator controller 40 display the fault item and the like on the display unit of the device.

In a case of a minor fault that does not affect the air-fuel ratio control, the engine system 1 continues the co-combustion control. In a case where the hydrogen mixing device controller 20 detects a minor fault, the hydrogen mixing device controller 20 transmits the minor fault contact signal to the generator controller 40, and transmits the details of the fault to the generator controller 40 through the network. In a case where the engine controller 30 detects a minor fault, the engine controller 30 transmits the minor fault contact signal to the generator controller 40, and transmits the details of the fault to the generator controller 40 through the network. The hydrogen mixing device controller 20, the engine controller 30, and the generator controller 40 display the fault item and the like on the display unit of the device.

### (3) Case where Serious Fault Occurs

In a case where a serious fault occurs during the co-combustion control, the engine system 1 immediately stops the co-combustion control and stops the system. In a case where the engine controller 30 or the hydrogen mixing device controller 20 detects a serious fault, the serious fault contact signal is transmitted to the generator controller 40. In a case where the generator controller 40 receives the serious fault contact signal or detects a serious fault, the hydrogen shut-off valve closed contact signal is transmitted to the hydrogen mixing device controller 20. The hydrogen mixing device controller 20 immediately fully closes the hydrogen shut-off valve 2b2. The generator controller 40 stops the operation of the generator 4. The hydrogen mixing device controller 20, the engine controller 30, and the generator controller 40 display the fault item on the display unit of the device.

### (Effects)

As described above, according to the present embodiment, the co-combustion control is realized by adding the hydrogen mixing device 2 and the controller 20 to a configuration of a general engine system that does not perform the co-combustion control. By adding the hydrogen mixing device 2 and the like and performing cooperation between the controllers 20, 30, and 40, it is possible to realize the hydrogen co-combustion without significantly changing the hardware and software of the engine system in the related art.

According to the present embodiment, the engine controller 30 determines whether or not the co-combustion control can be started from the operating state of the engine 3, and in a case where the co-combustion control can be started, the engine controller 30 notifies the other controllers 20 and 40 of the fact. In a case where the instruction signal to start the co-combustion control is notified from the other controllers 20 and 40, the engine controller 30 gradually retards the ignition timing. In a case where the retard of the ignition timing is completed, the engine controller 30 transmits the fact to the hydrogen mixing device controller 20, and waits until the mixing flag is received. On the other hand, the hydrogen mixing device controller 20 starts the mixing of the hydrogen after the retard of the ignition timing is completed, and transmits the mixing ratio and the mixing flag to the engine controller 30. The engine controller 30 controls the air-fuel ratio using the mixing ratio. In a case where an instruction to end the hydrogen co-combustion is transmitted from the hydrogen mixing device controller 20, the generator controller 40, or the like, the engine controller 30 ends the co-combustion control in the reverse procedure described above. By operating based on the defined mode (the modes S1 to S6 illustrated in FIG. 3) in cooperation with the three controllers 20, 30, and 40, and changing the ignition timing control and the air-fuel ratio control according to the mixing ratio in this order, it is possible to safely realize the co-combustion control without significantly changing the hardware and software of the related art.

According to the present embodiment, in a case where an abnormality occurs during the co-combustion control, in a case where the condition of the co-combustion control is not satisfied, the co-combustion control can be stopped in the normal sequence, and the fact that the co-combustion control is not suitable can be displayed on the panel or the like, so that the operator can be notified. In a case where a minor fault that does not need to be immediately stopped occurs, in a case where the minor fault affects the co-combustion control (for example, affects the air-fuel ratio control), the co-combustion control is stopped in the normal sequence, and in a case of a minor fault that does not affect the co-combustion control, the co-combustion control is continued. In a case where a serious fault occurs, the hydrogen shut-off valve is immediately closed to stop the engine system 1. By classifying the stop of the co-combustion control in the normal sequence and the continuation of the co-combustion control in a case where the co-combustion control is not suitable or a fault occurs, it is possible to continue the hydrogen co-combustion control as much as possible while ensuring safety in a case where an abnormality occurs, and to contribute to the reduction of CO₂.

In the above-described embodiment, the city gas and the hydrogen gas are mixed, but the type of gas to be mixed is not limited to these. The gas to be mixed may be three or more types.

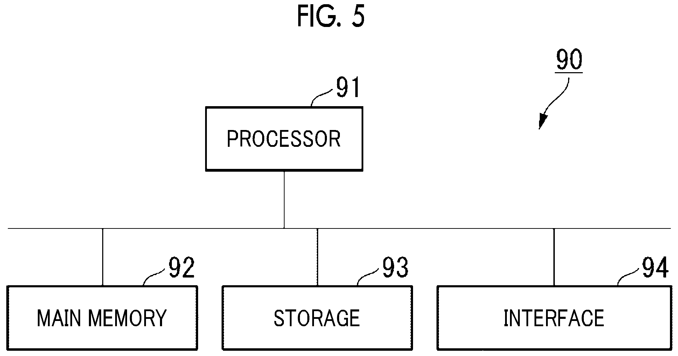

FIG. 5 is a schematic block diagram showing a hardware configuration of the controller according to the embodiment. A computer 90 includes a processor 91, a main memory 92, a storage 93, and an interface 94. The hydrogen mixing device controller 20, the engine controller 30, and the generator controller 40 described above are mounted on the computer 90. The operations of the respective processing units described above are stored in the storage 93 in the form of a program. The processor 91 reads the program from the storage 93, loads the program into the main memory 92, and executes the above processing in accordance with the program. The processor 91 secures a storage area corresponding to each storage unit described above in the main memory 92 according to the program. Examples of the processor 91 include a central processing unit (CPU), a graphics processing unit (GPU), and a microprocessor.

The program may be for implementing part of the functions to be exhibited by the computer 90. For example, the program may cause the functions to be exhibited in combination with another program already stored in the storage, or in combination with another program implemented in another device. In other embodiments, the computer 90 may include a custom large scale integrated circuit (LSI) such as a programmable logic device (PLD), in addition to the above configuration or instead of the above configuration. Examples of the PLD include a programmable array logic (PAL), a generic array logic (GAL), a complex programmable logic device (CPLD), and a field programmable gate array (FPGA). In this case, some or all of the functions realized by the processor 91 may be realized by the integrated circuit. Such an integrated circuit is also included in an example of the processor.

Examples of the storage 93 include a hard disk drive (HDD), a solid state drive (SSD), a magnetic disk, a magneto-optical disk, a compact disc read-only memory (CD-ROM), a digital versatile disc read-only memory (DVD-ROM), and a semiconductor memory. The storage 93 may be an internal medium directly connected to a bus of the computer 90, or may be an external medium connected to the computer 90 via the interface 94 or a communication line. When this program is distributed to the computer 90 via the communication line, the computer 90 that has received the distribution may load the program into the main memory 92, and may execute the above-described processing. In at least one embodiment, the storage 93 is a non-transitory tangible storage medium.

The program may realize a part of the foregoing functions. Further, the program may be a program that realizes the functions described above in combination with other programs already stored in the storage 93, that is, a so-called difference file (difference program).

As described above, several embodiments according to the present disclosure have been described, but all of these embodiments are presented by way of example and are not intended to limit the scope of the invention. These embodiments can be implemented in various other forms, and various omissions, replacements, and changes can be made within the scope of the invention that does not depart from its gist. These embodiments and modifications thereof are included in the scope of the invention described in the claims and the equivalent scope thereof, as well as in the scope and gist of the invention.

### <Supplementary Notes>

The control device, the engine system, the control method, and the program described in each embodiment are understood as follows, for example.

(1) A control device according to a first aspect is a control device for an engine, the control device including: means for determining whether or not to perform, during operation of the engine, co-combustion control using a mixed fuel obtained by mixing a plurality of fuels; means for controlling an ignition timing of the engine; and means for performing air-fuel ratio control in a combustion chamber of the engine, in which, in a case where the means for determining determines to perform the co-combustion control, the means for controlling the ignition timing starts retard control of the ignition timing before the mixed fuel is supplied, and completes the retard control before the mixed fuel is supplied, and the means for performing the air-fuel ratio control performs, when the supply of the mixed fuel is started, the air-fuel ratio control with a target air-fuel ratio corresponding to a mixing ratio indicating a proportion of each of the plurality of fuels in the mixed fuel.
   Accordingly, it is possible to switch from non-fuel mixing to fuel mixing during operation of the engine while stably operating the engine.
   The case where the means for determining determines to perform the co-combustion control is, for example, a case where the co-combustion availability determination unit 32 determines that the co-combustion control is possible, transmits the co-combustion permission flag = ON to the hydrogen mixing device controller 20 or the like, and the controller 33 receives the instruction signal (co-combustion control PB = ON) to start the co-combustion control. The case where the means for determining determines not to perform the co-combustion control is, for example, a case where a condition in which the co-combustion control can be performed is not satisfied or the controller 33 detects a minor fault or a serious fault that affects the air-fuel ratio control.
(2) A control device according to a second aspect is the control device according to (1), in which, in a case where the co-combustion control is stopped, a fuel mixing device that supplies the mixed fuel to the engine reduces the mixing ratio of the fuel other than one of the plurality of fuels in the mixed fuel, the means for performing the air-fuel ratio control continues the air-fuel ratio control with a target air-fuel ratio corresponding to the mixing ratio until the mixing ratio of all the fuels other than the one fuel becomes 0%, and after the mixing ratio becomes 0%, the means for controlling the ignition timing returns the ignition timing to a state before the retard control.
   Accordingly, it is possible to switch from fuel mixing to non-fuel mixing during operation of the engine while stably operating the engine.
   The case where the means for determining determines to stop the co-combustion control is, for example, a case where the engine controller 30 detects that the condition for the co-combustion control is not satisfied, the co-combustion availability determination unit 32 transmits the co-combustion permission flag = OFF to the hydrogen mixing device controller 20, or the controller 33 detects a minor fault or a serious fault that affects the air-fuel ratio control.
(3) A control device according to a third aspect is the control device according to (1) or (2), in which the means for determining, when any one of a load, a lubricant temperature, and a coolant temperature of the engine falls within a predetermined range, considers that an operating state of the engine is stable and determines to perform the co-combustion control, and when any one of the load, the lubricant temperature, and the coolant temperature falls out of the predetermined range, determines to stop the co-combustion control.
   In a case where it is considered that the engine can be stably operated even in a case where the co-combustion control is performed, the co-combustion control is permitted, and in a case where it is considered that the stable operation of the engine cannot be maintained by performing the co-combustion control, a determination is made to stop the co-combustion control. Accordingly, it is possible to switch between fuel mixing and non-fuel mixing while maintaining the stable operation of the engine.
(4) An engine system according to a fourth aspect includes an engine, a fuel mixing device that mixes a plurality of fuels to generate a mixed fuel and supplies the mixed fuel to the engine, and the control device according to (1) to (3).
   By adding the fuel mixing device and performing cooperation with the engine and the control device, it is possible to realize the co-combustion control without significantly changing the hardware and software of the engine system in the related art.
(5) An engine system according to a fifth aspect is the engine system according to (4), in which when the means for determining determines to perform the co-combustion control, the means for determining notifies the fuel mixing device that the co-combustion control is possible, the fuel mixing device instructs, after receiving the notification, the control device to start the co-combustion control, and the means for controlling the ignition timing starts the retard control based on the instruction.
   Accordingly, the co-combustion control can be performed only in a case where the engine can be stably operated even in a case where the co-combustion control is started.
(6) An engine system according to a sixth aspect is the engine system according to (4) or (5), in which when the retard control is completed, the means for controlling the ignition timing notifies the fuel mixing device of completion of the retard control, the fuel mixing device starts, after receiving the notification, generation of the mixed fuel and supply of the mixed fuel to the engine, and notifies the control device of the mixing ratio, and the means for performing the air-fuel ratio control calculates the air-fuel ratio corresponding to the notified mixing ratio, and performs the air-fuel ratio control with the calculated air-fuel ratio as a target.
   At the start of the co-combustion control, the control is performed in the order of the change in the ignition timing and the change in the mixing ratio (change in the air-fuel ratio), so that the co-combustion control can be safely started without significantly changing the hardware and software in the related art.
(7) An engine system according to a seventh aspect is the engine system according to (4) to (6), in which in a case where the co-combustion control is stopped, the fuel mixing device reduces the mixing ratio to 0%, and the means for controlling the ignition timing returns, after the mixing ratio becomes 0%, the ignition timing to a state before the retard control.
   At the stop of the co-combustion control, the control is performed in the order of the change in the mixing ratio (change in the air-fuel ratio) and the change in the ignition timing, so that the co-combustion control can be safely stopped without significantly changing the hardware and software in the related art.
(8) An engine system according to an eighth aspect is the engine system according to (4) to (7), in which the means for determining classifies, based on a predetermined determination criterion, an abnormality occurring in the engine into any one of a minor fault allowing continuation of the co-combustion control, a minor fault not allowing continuation of the co-combustion control, and a serious fault requiring operation of the engine to be stopped, and the fuel mixing device continues the generation of the mixed fuel when the means for determining determines that the minor fault allowing continuation of the co-combustion control has occurred, reduces the mixing ratio over a predetermined time until the mixing ratio becomes 0% when the means for determining determines that the minor fault not allowing continuation of the co-combustion control has occurred, and immediately reduces the mixing ratio to 0% when the means for determining determines that the serious fault has occurred.
   By changing the mixing ratio of the fuel according to the nature of the fault that has occurred during the operation, it is possible to continue the co-combustion control as much as possible while ensuring safety in a case where an abnormality occurs.
(9) A control method according to a ninth aspect is a control method for an engine, the control method including a step of determining whether or not to perform, during operation of the engine, co-combustion control using a mixed fuel obtained by mixing a plurality of fuels, a step of controlling an ignition timing of the engine, and a step of performing air-fuel ratio control in a combustion chamber of the engine, in which, in a case where determination is made to perform the co-combustion control in the step of determining, in the step of controlling the ignition timing, retard control of the ignition timing is started before the mixed fuel is supplied, and the retard control is completed before the mixed fuel is supplied, and in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.
(10) A program according to a tenth aspect causes a computer of a control device for an engine to execute a process including a step of determining whether or not to perform, during operation of the engine, co-combustion control using a mixed fuel obtained by mixing a plurality of fuels, a step of controlling an ignition timing of the engine, and a step of performing air-fuel ratio control in a combustion chamber of the engine, in which, in a case where determination is made to perform the co-combustion control in the step of determining, in the step of controlling the ignition timing, retard control of the ignition timing is started before the mixed fuel is supplied, and the retard control is completed before the mixed fuel is supplied, and in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.

In the above-described embodiment, the mixed fuel is obtained by mixing hydrogen with city gas, and the mixed fuel of city gas and hydrogen has a combustion velocity faster than that of city gas alone. Therefore, the retard control of the ignition timing is started. On the other hand, depending on the fuel mixed with the city gas, the combustion velocity may be slower than that of the city gas alone. In this case, it is possible to cope with the case by changing the control in the above-described embodiment, such as performing the supply of the mixed fuel first and then performing the advance angle control of the ignition timing.

### Industrial Applicability

According to the control device, the engine system, the control method, and the program, it is possible to switch between fuel mixing and non-fuel mixing during operation of the engine while stably operating the engine.

### Reference Signs List

1: engine system
2: hydrogen mixing device
2a: flow control valve
2b1: flow control valve
2b2: hydrogen shut-off valve
3: engine
4: generator
5: circuit breaker
6: load
20: hydrogen mixing device controller
30: engine controller
31: signal acquisition unit
32: co-combustion availability determination unit
33: control unit
40: generator controller
90: computer
91: processor
92: main memory
93: storage
94: interface

## Claims

1. A control device for an engine, the control device comprising:
means for determining whether or not to perform, during operation of the engine, co-combustion control using a mixed fuel obtained by mixing a plurality of fuels;
means for controlling an ignition timing of the engine; and
means for performing air-fuel ratio control in a combustion chamber of the engine,
wherein, in a case where the means for determining determines to perform the co-combustion control,
the means for controlling the ignition timing starts retard control of the ignition timing before the mixed fuel is supplied, and completes the retard control before the mixed fuel is supplied, and
the means for performing the air-fuel ratio control performs, when the supply of the mixed fuel is started, the air-fuel ratio control with a target air-fuel ratio corresponding to a mixing ratio indicating a proportion of each of the plurality of fuels in the mixed fuel.

2. The control device according to Claim 1,
wherein, in a case where the co-combustion control is stopped, a fuel mixing device that supplies the mixed fuel to the engine reduces the mixing ratio of the fuel other than one of the plurality of fuels in the mixed fuel,
the means for performing the air-fuel ratio control continues the air-fuel ratio control with a target air-fuel ratio corresponding to the mixing ratio until the mixing ratio of all the fuels other than the one fuel becomes 0%, and
after the mixing ratio becomes 0%, the means for controlling the ignition timing returns the ignition timing to a state before the retard control.

3. The control device according to Claim 1 or 2,
wherein the means for determining, when any one of a load, a lubricant temperature, and a coolant temperature of the engine falls within a predetermined range, considers that an operating state of the engine is stable and determines to perform the co-combustion control, and when any one of the load, the lubricant temperature, and the coolant temperature falls out of the predetermined range, determines to stop the co-combustion control.

4. An engine system comprising:
an engine;
a fuel mixing device that mixes a plurality of fuels to generate a mixed fuel and supplies the mixed fuel to the engine; and
the control device according to Claim 1 or 2.

5. The engine system according to Claim 4,
wherein when the means for determining determines to perform the co-combustion control, the means for determining notifies the fuel mixing device that the co-combustion control is possible,
the fuel mixing device instructs, after receiving the notification, the control device to start the co-combustion control, and
the means for controlling the ignition timing starts the retard control based on the instruction.

6. The engine system according to Claim 4,
wherein when the retard control is completed, the means for controlling the ignition timing notifies the fuel mixing device of completion of the retard control,
the fuel mixing device starts, after receiving the notification, generation of the mixed fuel and supply of the mixed fuel to the engine, and notifies the control device of the mixing ratio, and
the means for performing the air-fuel ratio control calculates the air-fuel ratio corresponding to the notified mixing ratio, and performs the air-fuel ratio control with the calculated air-fuel ratio as a target.

7. The engine system according to Claim 4,
wherein in a case where the co-combustion control is stopped,
the fuel mixing device reduces the mixing ratio to 0%, and
the means for controlling the ignition timing returns, after the mixing ratio becomes 0%, the ignition timing to a state before the retard control.

8. The engine system according to Claim 4,
wherein the means for determining classifies, based on a predetermined determination criterion, an abnormality occurring in the engine into any one of a minor fault allowing continuation of the co-combustion control, a minor fault not allowing continuation of the co-combustion control, and a serious fault requiring operation of the engine to be stopped, and
the fuel mixing device continues the generation of the mixed fuel when the means for determining determines that the minor fault allowing continuation of the co-combustion control has occurred, reduces the mixing ratio over a predetermined time until the mixing ratio becomes 0% when the means for determining determines that the minor fault not allowing continuation of the co-combustion control has occurred, and immediately reduces the mixing ratio to 0% when the means for determining determines that the serious fault has occurred.

9. A control method for an engine, the control method comprising:
a step of determining whether or not to perform, during operation of the engine, co-combustion control using a mixed fuel obtained by mixing a plurality of fuels;
a step of controlling an ignition timing of the engine; and
a step of performing air-fuel ratio control in a combustion chamber of the engine,
wherein, in a case where determination is made to perform the co-combustion control in the step of determining,
in the step of controlling the ignition timing, retard control of the ignition timing is started before the mixed fuel is supplied, and the retard control is completed before the mixed fuel is supplied, and
in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.

10. A program causing a computer of a control device for an engine to execute a process comprising:
a step of determining whether or not to perform, during operation of the engine, co-combustion control using a mixed fuel obtained by mixing a plurality of fuels;
a step of controlling an ignition timing of the engine; and
a step of performing air-fuel ratio control in a combustion chamber of the engine,
wherein in a case where a determination is made to perform the co-combustion control in the step of determining,
in the step of controlling the ignition timing, retard control of the ignition timing is started before the mixed fuel is supplied, and the retard control is completed before the mixed fuel is supplied, and
in the step of performing the air-fuel ratio control, when the supply of the mixed fuel is started, the air-fuel ratio control is performed with a target air-fuel ratio corresponding to a mixing ratio indicating a proportion of each of the plurality of fuels in the mixed fuel.
